# EUROPÄISCHE PATENTANMELDUNG

(11) **EP 1 205 326 A2**
(43) Veröffentlichungstag der Anmeldung: **15.05.2002**
(21) Anmeldenummer: 01121501.9
(22) Anmeldetag: 08.09.2001
(51) Int. Cl.: B60J 11/00

(54) **Flexible Abdeckung für Fahrzeuge, insbesondere Kraftfahrzeuge**

(30) Priorität: 11.11.2000 DE 20019218 U
(71) Anmelder: APA GmbH & Co. KG, 70736 Fellbach (DE)
(72) Erfinder: Bauder, Otto, 70193 Stuttgart (DE)
(74) Vertreter: Einsele, Rolf W.

(57) **Zusammenfassung**

Die Erfindung betrifft eine flexible Abdeckung zum schützenden Abdecken von Fahrzeugen, insbesondere von Kraftfahrzeugen, wobei die Abdeckung im Wesentlichen den abzudeckenden Flächen, z.B. den Scheiben eines Kraftfahrzeuges, geometrisch angepasst und mit einem überstehenden Rand über diese Flächen ausgebildet ist. An den überstehenden Rändern sind magnetische Haftvorrichtungen vorgesehen, die mit den den abzudeckenden Blechteilen benachbarten Blechteilen der Karosserie des Kraftfahrzeuges zusammenwirken; die magnetischen Haftvorrichtungen sind Permanent-Magnete (11), die in den überstehenden Rand (12) im Abstand eingearbeitet sind. Zur Diebstahlsicherung ist an der Abdeckung ein in Tür- bzw. Fensterrahmen- bzw. Kofferraum festzuklemmender Teil (13) vorgesehen.

## Beschreibung

Die Erfindung betrifft eine flexible Abdeckung für Fahrzeuge, insbesondere für Kraftfahrzeuge.

Die Erfindung betrifft eine flexible Abdeckung für Fahrzeuge, insbesondere für Kraftfahrzeuge zum schützenden Abdecken insbesondere der Scheiben eines Kraftfahrzeuges, wobei die Abdeckung im Wesentlichen den abzudeckenden Flächen angepaßt und geringfügig einen Rand bildend überstehend über die abzudeckenden Flächen ausgeformt ist und wobei die Abdeckung mit Blechteilen der Karosserie zusammenwirkenden magnetischen Hafteinrichtungen versehen ist.

Flexible Abdeckungen zum Parken von Fahrzeugen, insbesondere von Kraftfahrzeugen unter der sogenannten "Laternengarage" bestehen aus Weich-Kunststoff-Folien. Diese werden mit dehnbaren z.B. Schlaufen o.ä. an Teilen der Karosserie befestigt. Sie sind relativ umständlich anzubringen. Es sind auch alternative Lösungen bekannt, bei denen Teile der flexiblen Abdeckung im Tür- bzw. Fenster-Rahmen des Fahrzeuges zur Befestigung eingeklemmt werden. Auch hier ist die Anbringung und das Wieder-Abnehmen relativ schwierig, da man das saubere Aufliegen der Abdeckung auf den abzudeckenden Flächen ohne Hilfe einer zweiten Person kaum erreichen kann.

Der Erfindung wurde die Aufgabe zugrunde gelegt, eine Abdeckung zu schaffen, die bei geringen Herstellungskosten leicht und zuverlässig und sauber anliegend an den abzudeckenden Flächen befestigbar sein sollte und die zudem auch gegen Diebstahl gesichert anzubringen ist.

Diese Aufgabe wird nach der Erfindung dadurch gelöst, daß in dem über die abzudeckenden Flächen überstehenden Rand der flexiblen Abdeckung im Abstand Permanent-Magneten eingearbeitet sind und daß zur Diebstahlsicherung ein in Tür- bzw. Fenster-Rahmen oder Kofferraumdeckel festklemmbares Teil des Randes der Abdeckung vorgesehen ist.

Eine solche flexible Abdeckung kann z.B. lediglich die Frontscheibe oder aber auch Front- und die vorderen Seitenscheiben und die Spiegel eines Kraftfahrzeuges abdecken. Es ist aber auch denkbar, daß eine solche flexible Abdeckung haubenartig das Dach des Fahrzeuges sowie Front-, Heck- und die Seitenscheiben einschließlich der Spiegel abdeckt.

Die Permanent-Magnete können am Rand der flexiblen Abdeckung in beliebiger Form befestigt sein; sie können z.B. angeklebt oder auch eingenäht oder eingeschweißt sein. Je nach Größe der flexiblen Abdeckung ist der Abstand zwischen den einzelnen Permanent-Magneten im Rand zu bemessen: Der Abstand sollte so gewählt sein, daß die Abdeckung z.B. auch bei stärkerem Wind sicher festgehalten ist.

Nachstehend wird die Erfindung anhand von zwei unterschiedlichen Ausführungs-Beispielen unter Bezugnahme auf die Zeichnung näher erläutert.

Es zeigt:
- Figur 1: eine erste Ausführungsform der flexiblen Abdeckung, wobei lediglich die Frontscheibe einschließlich der Seitenscheiben und der Spiegel abgedeckt ist;
- Figur 2: eine zweite haubenartige Ausführung der flexiblen Abdeckung, die Dach, Front-, Heck- und Seitenscheiben inklusive Spiegel eines Kraftfahrzeuges abdeckt.

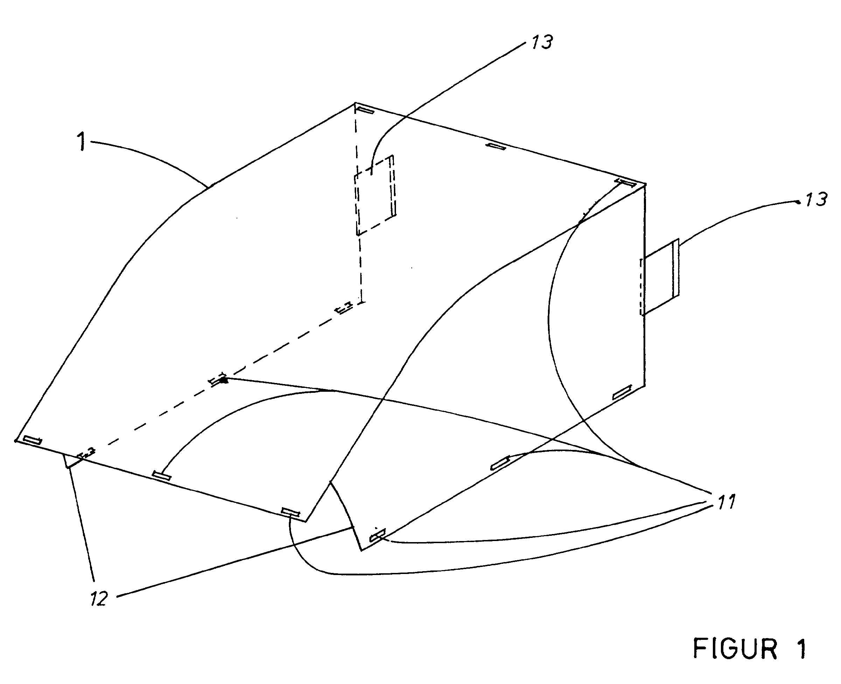

Mit 1 ist in Figur 1 eine flexible Abdeckung bezeichnet, die lediglich Frontscheibe, Seitenscheiben und die Außenspiegel eines Kraftfahrzeuges überdeckt. Mit 11 sind die in den überstehenden Rand 12 eingearbeiteten Permanent-Magnete zur magnetischen Befestigung der flexiblen Abdeckung 1 an den abzudeckenden Flächen benachbarten Karosserieteilen bezeichnet. Mit 13 ist ein Teil des Randes der flexiblen Abdeckung 1 bezeichnet, der zur Diebstahlsicherung in den Rahmen der Fahrer- und/oder Beifahrer tür eingeklemmt werden kann.

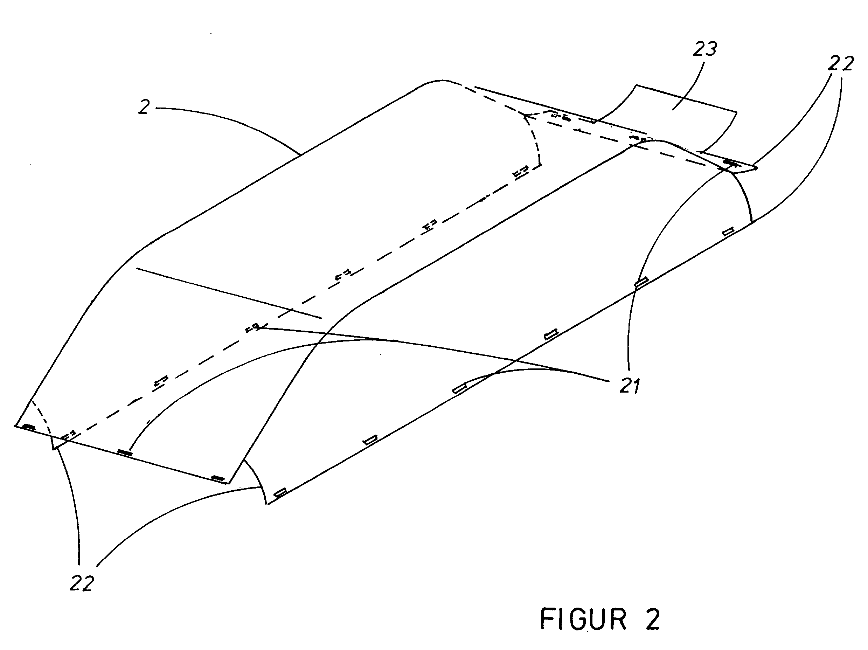

In Figur 2 ist eine haubenartige Abdeckung 2 aus flexiblem Kunststoffmaterial gezeigt, die Dach, Front-, Heck- und Seitenscheiben inklusive der Spiegel eines Fahrzeuges überdeckt. Im Übrigen ist die Konstruktion in Figur 2 hinsichtlich der Permanent-Magnete 21 im überstehenden Rand 22 und hinsichtlich des einzuklemmenden Randteils 23 vergleichbar aufgebaut mit der Abdeckung nach Figur 1. Allerdings wird das Randteil 23 vom geschlossenen Kofferraumdeckel festgeklemmt.

Alternative Ausgestaltungsformen sind für den Fachmann leicht vorstellbar.

## Patentansprüche

1. Flexible Abdeckung für Fahrzeuge, insbesondere für Kraftfahrzeuge zum schützenden Abdecken insbesondere der Scheiben eines Kraftfahrzeuges, wobei die Abdeckung im Wesentlichen den abzudeckenden Flächen geometrisch angepaßt und einen geringfügig über die abzudeckenden Flächen überstehenden Rand bildend ausgeformt ist, und wobei die Abdeckung mit den abzudeckenden Flächen benachbarten Blechteilen der Karosserie zusammenwirkenden magnetischen Haftvorrichtungen versehen ist, **dadurch gekennzeichnet, daß** in den über die abzudeckenden Flächen überstehenden Rand der flexiblen Abdeckung (1,2) im Abstand Permanent-Magnete (11,21) eingearbeitet sind und daß zur Diebstahlsicherung ein in Tür- bzw. Fensterrahmen bzw. Kofferraumdeckel festzuklemmender Teil (12,23) des Randes (12) der Abdeckung vorgesehen ist.

2. Flexible Abdeckung nach Anspruch 1, **dadurch gekennzeichnet, daß** die Abdeckung (1) die Frontscheibe und/oder Seitenscheiben und/ oder die Außenspiegel eines Kraftfahrzeuges abdeckt.

3. Flexible Abdeckung nach Anspruch 1, **dadurch gekennzeichnet, daß** die Abdeckung (2) haubenartig zur Abdeckung von Dach, Frontscheibe, Heckscheibe, Seitenscheiben und Spiegel eines Kraftfahrzeuges ausgeführt ist.

4. Flexible Abdeckung nach einem der vorhergehenden Ansprüche, **dadurch gekennzeichnet, daß** die Permanent-Magnete in den Rand der Abdeckung eingeklebt, eingenäht, eingefalzt, o.a. sind.
